# EUROPÄISCHE PATENTSCHRIFT

(11) **EP 1 056 566 B1**
(45) Veröffentlichungstag und Bekanntmachung des Hinweises auf die Patenterteilung: **13.03.2002**
(21) Anmeldenummer: 98959863.6
(22) Anmeldetag: 09.11.1998
(51) Int. Cl.: B23Q 1/58, H02K 41/02

(54) **LINEARANTRIEB**
LINEAR DRIVE
ENTRAINEMENT LINEAIRE

(30) Priorität: 18.02.1998 DE 19806832
(43) Veröffentlichungstag der Anmeldung: 06.12.2000
(73) Patentinhaber: Fraunhofer-Gesellschaft zur Förderung der angewandten Forschung e.V., 80636 München (DE)
(72) Erfinder: NESTLER, Rainer, D-09496 Marienberg (DE); KONVICKA, Jan, D-09120 Chemnitz (DE); WIELAND, Frank, D-09113 Chemnitz (DE)
(74) Vertreter: Grünecker, Kinkeldey, Stockmair & Schwanhäusser Anwaltssozietät
(86) Internationale Anmeldenummer: EP9807147
(87) Internationale Veröffentlichungsnummer: WO9942245

(56) Entgegenhaltungen:
- EP-A- 0 768 146
- GB-A- 2 194 907
- US-A- 3 579 001
- US-A- 4 247 794
- US-A- 4 831 290
- US-A- 5 401 128
- US-A- 5 486 727
- PATENT ABSTRACTS OF JAPAN vol. 18, no. 320 (E-1563), 17. Juni 1994 & JP 06 070534 A (YASKAWA ELECTRIC CORP), 11. März 1994
- PATENT ABSTRACTS OF JAPAN vol. 97, no. 10, 31. Oktober 1997 & JP 09 150334 A (TOYODA MACH WORKS LTD), 10. Juni 1997
- PATENT ABSTRACTS OF JAPAN vol. 17, no. 675 (M-1526), 13. Dezember 1993 & JP 05 228761 A (CANON INC), 7. September 1993
- PATENT ABSTRACTS OF JAPAN vol. 7, no. 124 (M-218) [1269], 28. Mai 1983 & JP 58 040237 A (TOKYO SHIBAURA DENKI K.K.), 9. März 1983

## Beschreibung

Die Erfindung betrifft eine Hexapod-Werkzeugmaschine gemäß dem Oberbegriff des Patentanspruchs 1. Eine derartige Werkzeugmaschine ist beispielsweise aus der US-A-5 401 128 bekannt, die für die Streben Linearantriebe offenbart.

Derartige Linearantriebe werden vor allem im Werkzeugmaschinenbau zur Erzeugung einer Zustellbewegung zwischen einem Werkzeug und einem Werkstück eingesetzt. Insbesondere finden derartige Linearantriebe auf dem noch jungen Gebiet von Werkzeugmaschinen mit Parallelstrukturen Anwendung. In letzter Zeit sind insbesondere Hexapod-Werkzeugmaschinen bekannt geworden, bei denen das eigentliche Bearbeitungsmodul über sechs längenverstellbare Streben an einem Maschinenrahmen gelagert ist. Durch eine gezielte Veränderung der Strebenlängen lassen sich Zustellbewegungen des Werkzeuges zu dem Werkstück in allen sechs Raumfreiheitsgraden, d.h. drei translatorischen Freiheitsgraden und drei rotatorischen Freiheitsgraden, realisieren.

Weitere Hexapod-Strukturen sind aus den deutschen Patentanmeldungen P 196 36 100.1 und P 196 36 099.4 der Anmelderin der vorliegenden Anmeldung bekannt.

Bei modernen Werkzeugmaschinen werden heutzutage hohe Anforderungen an das Kraftaufnahmevermögen, die Zustell- und Fertigungsgenauigkeit sowie an das dynamische Verhalten gestellt. Leistungsfähige Steuerungen, mit denen sich neue Bearbeitungsstrategien, wie z.B. Hochgeschwindigkeitsbearbeitungsverfahren oder die Fertigung komplexer dreidimensionaler Formen, realisieren lassen, erfordern zur optimalen Ausschöpfung neue Antriebskonzepte, die sich mit konventionellen Antriebselementen nur begrenzt verwirklichen lassen.

So sind beispielsweise im Bereich der Linearantriebe seit langem Spindelantriebe bekannt, deren Leistungsvermögen jedoch durch die Umsetzung einer Drehbewegung in eine Linearbewegung beschränkt ist. Die bisher verwendeten linearen Direktantriebe zum Bewegen von Werkzeugmaschinentischen oder -schlitten sind aufgrund ihrer voluminösen Bauweise für die zuvor genannten Bearbeitungsstrategien nur in eingeschränktem Rahmen einsetzbar.

Auch der aus der US-A-5 401 128 bekannte elektrische Linearmotor, der dort als längenverstellbare Strebe einer Hexapod-Werkzeugmaschine eingesetzt ist, ist insbesondere im Hinblick auf sein dynamisches Verhalten verbesserungsbedürftig.

Der vorliegenden Erfindung liegt daher die Aufgabe zugrunde, eine Hexapod-Werkzeugmaschine mit kompakter steifer Verstrebungsstruktur und relativer Längsversteilung für die Streben anzugeben, die sich insbesondere für den Einsatz als Hochgeschwindigkeits-Werkzeugmaschine eignet.

Diese Aufgabe wird bei einer eingangs genannten Hexapod-Werkzeugmaschine durch die Merkmale des Patentanspruches 1 gelöst.

Hierdurch läßt sich eine besonders leichtgewichtige und trotzdem steife Struktur verwirklichen, die aufgrund ihrer geringen Masse hohe Beschleunigungen und Verzögerungen ermöglicht und damit die maximal mögliche Fertigungsgeschwindigkeit und Fertigungsgenauigkeit gegenüber der bisher bekannten Hexapod-Werkzeugmaschine erhöht.

Zudem kann die Längsverstellstruktur der Streben mit jeweils einem Linearantrieb nunmehr auch äußerst schlank ausgebildet werden, so daß ein größerer Gestaltungsfreiraum für die Anordnung mehrerer Linearantriebe verbleibt, was insbesondere bei kleineren Hexapod-Werkzeugmaschinen im Bereich des Bearbeitungsmoduls von Interesse ist.

In besonders raumökonomischer Weise sind die Antriebselemente des Linearantriebs, d.h. die entsprechenden Magnete bzw. Spulen, auf der Trägerseite an innenliegenden Flächen des Trägers vorgesehen.

Zum optimalen Ausgleich der auf den Träger einwirkenden Kräfte und Momente durch die Antriebselemente und zur Verbesserung der Laufeigenschaften des Trägers in seiner Lagerung an dem Gehäuse sind die Antriebselemente des Trägers paarweise vorgesehen und jeweils an einander gegenüberliegenden Flächen des Trägers angeordnet.

Eine besonders kompakte Ausführungsform ergibt sich dann, wenn die Antriebselemente, d.h. die entsprechenden Spulen bzw. Magnete des Trägergehäuses innerhalb der offenen Bereiche des Querschnittsprofiis des Trägers angeordnet sind, so daß diese beispieisweise nahezu den gesamten verbleibenden Freiraum des Querschnitsprofils ausfüllen, wobei Teilbereiche dieser Antriebselemente durchaus über den Träger hinausreichen können. Dies gilt auch bereits für solche Konstruktionen, bei denen Teilabschnitte der Antriebselemente des Trägergehäuses in die offenen Bereiche des Querschnittsprofils des Trägers hineinragen.

Zur Bereitstellung einer besonders leichtgewichtigen, aber trotzdem hochsteifen Trägerstruktur weist der Träger zwei U-förmige Profilkörper auf, die mit ihren Bodenseiten zueinander weisen. Zwischen diesen Bodenseiten ist im Kernbereich des Trägers, d.h. im Bereich der kleinsten Flächenträgheitsmomente, ein Leichtbau-Stützkörper angeordnet, der eine Vielzahl von Leerräumen, Durchbrüchen oder Öffnungen aufweist.

Weitere vorteilhafte Ausführungsformen sind in den weiteren Unteransprüchen angegeben.

Zur Erläuterung der Erfindung wird diese nun beispielhaft anhand von in der Zeichnung dargestellten Ausführungsformen beschrieben. Die Zeichnung zeigt in:
- Figur 1: eine Hexapod-Werkzeugmaschine mit sechs Linearantrieben,
- Figur 2: eine Außenansicht eines Linearantriebes ohne den eigentlichen Träger,
- Figur 3: eine Teilansicht eines Trägers des in Fig. 2 gezeigten Linearantriebes,
- Figur 4: einen Schnitt quer zur Längsachse des in Fig. 2 dargestellten Linearantriebes, einschließlich des Schnittes durch den Träger des Linearantriebes, und in
- Figur 5: drei verschiedene Ausführungsformen des Trägerquerschnittes einschließlich der Anordnung der Trägerantriebselemente sowie der trägergehäuseseitigen Antriebselemente.

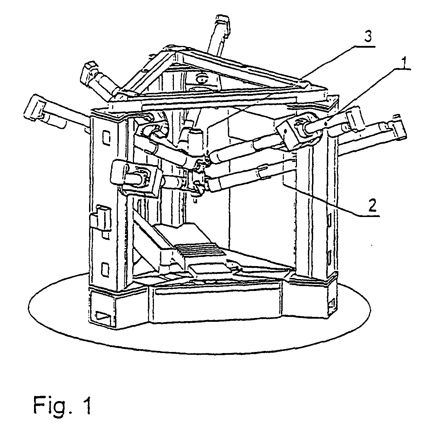

Die Figur 1 zeigt eine Hexapod-Werkzeugmaschine mit sechs längenverstellbaren Streben, die jeweils als elektrischer Linearantrieb ausgebildet sind. Die Streben 1 sind jeweils über ein erstes, in allen drei rotatorischen Raumfreiheitsgraden bewegbares Gelenk 2 an einem äußeren Maschinengestell angekoppelt. Zudem ist jede Strebe über ein ebenfalls in allen drei räumlichen Freiheitsgraden drehbares zweites Gelenk 3 an einem Bearbeitungsmodul, hier einer Einheit mit einer rotierenden Spindel, die beispielsweise zum Drehen, Fräsen und Bohren geeignet ist, angelenkt. Die Anlenkung der Streben 1 erfolgt dabei in zwei bezüglich der Achse der Spindel voneinander beabstandeten Ebenen, um so der Spindelachse des Bearbeitungsmoduls eine höhere Steifigkeit zu verleihen. Auch wird dadurch das Kollisionspotential der Streben untereinander verringert.

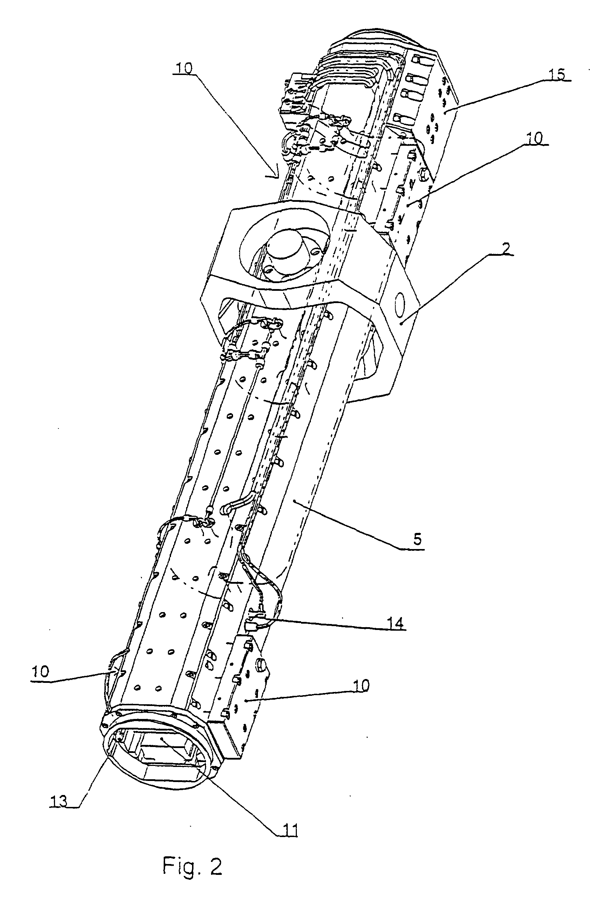

Im folgenden wird nun der Aufbau einer einzelnen, dieser als Linearantrieb ausgebildeten Streben anhand der Figuren 2 bis 4 näher erläutert.

Der Linearantrieb besteht aus einem Träger 4 sowie einem zugehörigen Trägergehäuse 5, an dem der Träger entlang seiner Längsrichtung bewegbar gelagert ist. Das Trägergehäuse 5 weist eine im wesentlichen hülsenartige, längliche, den stangenartigen Träger umgebende Form auf und besitzt eine im wesentlichen hexagonal ausgebildete Außenquerschnittskontur. Zur Ermöglichung eines einfachen Zugangs zu seinem Innenraum ist das Trägergehäuse 5 aus insgesamt vier sich entlang seiner Längsrichtung erstreckenden Platten mit prismatischem Querschnittsprofil zusammengesetzt, wobei die einzelnen Platten miteinander verschraubt sind.

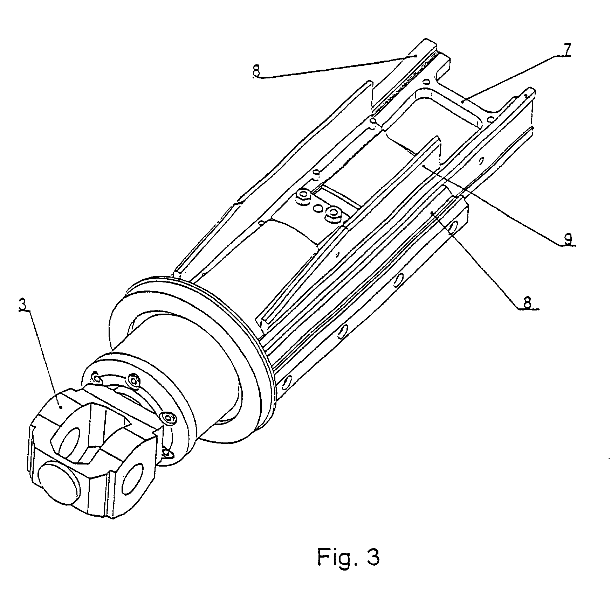

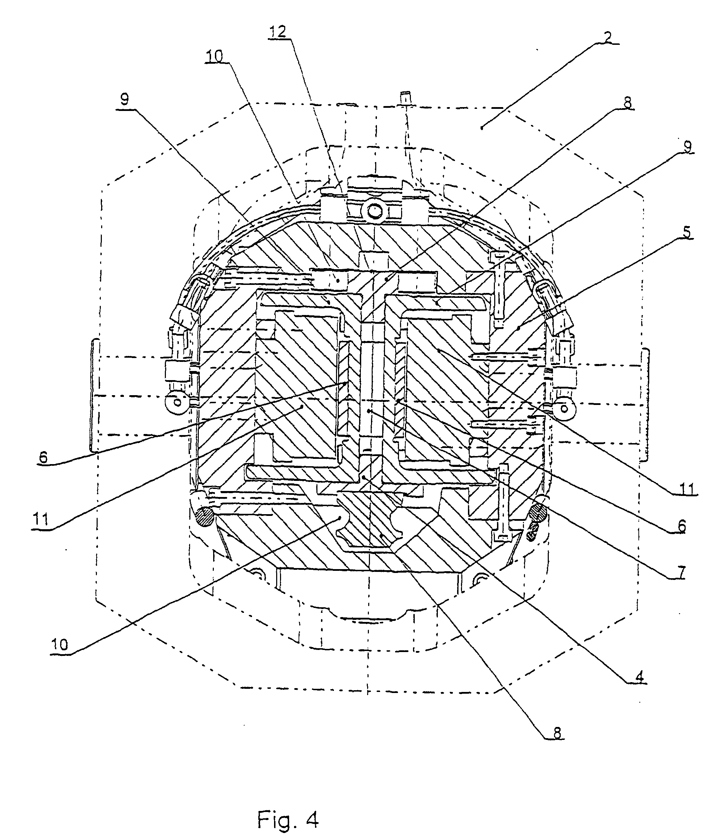

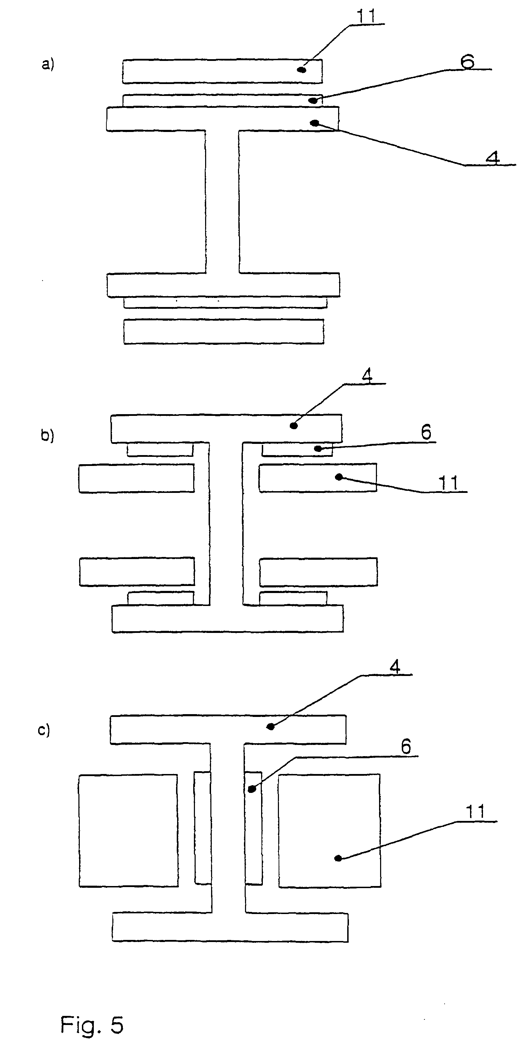

Der bewegbare Träger 4 weist ein Doppel-T-Querschnittsprofil auf, wie dies schematisch in Fig. 5 dargestellt ist. Wie insbesondere Fig. 4 zu entnehmen ist, ist dieser Träger 4 aus mehreren Teilkörpern zusammengesetzt, um eine einerseits ausreichend steife Struktur zu verwirklichen, die die an dem Bearbeitungsmodul auftretenden Kräfte ohne beeinträchtigende Verformung aufnehmen kann, andererseits aber ein geringes Gewicht aufweist, um die zu bewegenden Massen gering zu halten und damit ein gutes dynamisches Verhalten des Linearantriebes sicherzustellen. Hierzu weist der in Fig. 4 gezeigte Träger zwei U-förmige, stangenartige Profilkörper auf, die sich entlang zu der in Fig. 4 senkrechten Längsachse des Trägers erstrecken. Zwischen den Bodenseiten dieser Profilkörper ist ein Leichtbau-Stützkörper 7 angeordnet, der eine Reihe von insbesondere in Fig. 3 gezeigten Durchbrüchen zwischen entsprechenden Stegen aufweist. Die in Längsrichtung laufenden Randbereiche des Leichtbaukörpers sind als massivere Leisten ausgebildet.

In den Zwischenraum zwischen den Bodenseiten ragen weiterhin Ansätze von an den Außenseiten des Trägers 4 angebrachten Führungselementen mit entsprechenden Führungsabschnitten hinein, über die der Träger an dem Trägergehäuse 5 abgestützt ist. Die Führungselemente 8 können auch unmittelbar an dem dünnwandig und gitterförmig ausgestalteten Leichtbau-Stützelement 7 an dessen Randleisten vorgesehen werden, wodurch sich im Vergleich zu separaten, durch Befestigungsmittel angebrachten Führungsschienen eine höhere Präzision erzielen läßt. Alternativ können die Führungselemente sowohl als separate Teile als auch als integral an den U-förmigen Profilkörpern vorgesehen werden.

Die Schenkel des jeweiligen U-Profils besitzen eine etwas unterschiedliche Länge. Der in Fig. 2 jeweils unten liegende Schenkel ist etwas länger ausgebildet und erstreckt sich in eine an der Gehäuseinnenwand vorgesehene Längsnut.

Bei dem in den Figuren 2 bis 4 gezeigten Ausführungsbeispiel sind die Führungselemente 8 an den beiden einander gegenüberfiegenden Außenflächen des Doppel-T-Profils angeordnet, wobei ein Führungselement in ein Festlager zwischen Träger und Trägergehäuse integriert ist, das Laufflächen für an dem Trägergehäuse 5 befestigte Laufrollen aufweist. Anstelle von Laufrollen können auch andere Linearführungsvorrichtungen mit und ohne Wälzkörper vorgesehen werden. Das auf der gegenüberliegenden Seite angeordnete Lager ist hingegen als Loslagerführung ausgebildet, um Verspannungen durch kräftemäßige Überbestimmungen in den Führungselementen zu vermeiden. In dem in Fig. 4 gezeigten Ausführungsbeispiel ist dieses Loslager als profilierte Gleitschiene ausgestaltet. Alternativ zu einer beidseitigen Führung kann auch eine einseitige Führung vorgesehen werden.

Zur Bewegung des Trägers 4, der an beiden Seiten des Trägergehäuses 5 ausgefahren werden kann, sind an dem Träger und an dem Trägergehäuse Antriebs- bzw. Motorelemente 6, 11 vorgesehen, wobei es sich um Spulen bzw. Magnete zur Ermöglichung eines elektrischen Direktantriebes handelt. Verschiedene Ausführungen der Anordnung dieser Antriebselemente 6, 11 sind in Fig. 5 a) bis c) dargestelt. Zuerst wird nun die Ausführungsform nach Fig. 5 c) näher anhand von Fig. 4 erläutert. Die trägerseitigen Antriebselemente 6 sind im Bereich des Mittelsteges des Doppel-T-Querschnittes angeordnet, genauer in den entsprechenden Ausnehmungen an den Bodenseiten der U-förmigen Profilkörper 9. Zur Vermeidung der Erzeugung von auf den Träger bezüglich seiner Führungsrichtung einwirkenden Drehmomenten ist jeweils ein Paar von Antriebselementen 6 einander gegenüberliegend angeordnet. Insgesamt befinden sich eine Vielzahl derartiger Antriebselementpaare 6 entlang der Längsachse an dem Träger 4 (Doppelkammanordnung). Den trägerseiteigen Antriebselementen 6 sind gehäuseseitig gegenüberliegend Antriebselemente 11 an dem Gehäuse 5 angebracht, die ebenfalls regelmäßig und einander paarweise gegenüberliegend angeordent sind, so daß sich eine Symmetrie zur Längsachse ergibt. Die gehäuseseitigen Antriebselemente 11 sind dabei so gestaltet, daß sie nahezu den gesamten offenen Bereich des Querschnittsprofils des Trägers 4 ausfüllen, was zu einer besonders kompakten Bauweise führt. Auch von diesen gehäuseseitigen Antriebselementen sind mehrere entlang der Längsachse an der Innenwand jeweils einer Gehäuseplatte angeschraubt, so daß mit der Entfernung einer solchen Platte gleichzeitig die gehäuseseitigen Antriebselemente 11 abgenommen werden können.

Bei einer weiteren, in Fig. 5 b) dargestellten Ausführungsform sind die trägerseitigen Antriebselemente 6 an den Innenseiten der außenliegenden Schenkel des Doppel-T-Profilquerschnitts angeordnet. Auch hier ragen die entsprechend gegenüberliegend angeordneten gehäuseseitigen Antriebselemente in den offenen Bereich des Querschnitts, d.h. zwischen die Schenkel des Doppel-T-Profils hinein. Die Führung des Trägers 4 an dem Gehäuse 5 kann bei der Ausführungsform nach Fig. 5 b) in gleicher Weise, wie in Fig. 4 gezeigt, erfolgen.

Bei einer dritten Ausführungsform sind die trägerseitigen Antriebselemente 6 auf den Außenseiten der außenliegenden Schenkel des Doppel-T-Profils jeweils einander gegenüberliegend angeordnet. Die Führung des Trägers 4 kann hier in die offenen Bereiche des Doppel-T-Profils gelegt werden, um eine besonders kompakte Bauweise zu verwirklichen.

Zur gezielten Längenverstellung des Linearantriebs muß die Stellung des Trägers 4 zu dem Gehäuse 5 erfaßt werden. Hierzu ist ein Längenmeßsystem vorgesehen, das einen an dem Gehäuse 5 angebrachten Meßkopf 13 aufweist, der vorzugsweise an einem Ende des Gehäuses liegt. Weiterhin umfaßt das Längenmeßsystem Markierungsmittel an dem Träger, die in eine Führungsschiene, vorzugsweise diese, die im Einbaufall des Linearantriebes oben liegt, integriert sind. Weitherhin sind Sicherheitselemente vorgesehen, die ein vollständiges Herausfahren des Trägers 4 aus dem Gehäuse 5 verhindern. Diese können sowohl elektrisch als auch mechanisch ausgebildet werden. In dem gezeigten Ausführungsbeispiel ist in Fig. 2 an dem einen Ende des Gehäuses als Sicherheitselement ein Endschalter 14 gezeigt, während an dem anderen Ende des Gehäuse eine stromlos arbeitende Sicherheitseinrichtung 15 als Absturzsicherung vorgesehen ist.

Der beschriebene Linearantrieb läßt sich für vielfältige Antriebszwecke einsetzen, eignet sich jedoch vorrangig für die Verwendung von Vorschubachsen von Parallelstrukturen, wie beispielsweise Hexapod-Strukturen.

## Patentansprüche

1. Hexapod-Werkzeugmaschine mit längenverstellbaren Streben, die durch ein Bearbeitungsmodul miteinander verbunden sind, wobei die längenverstellbaren Streben als Linearantriebe ausgebildete Längenverstelleinrichtungen aufweisen, **dadurch gekennzeichnet, daß** der Linearantrieb einen in einem Trägergehäuse (5) längsverschieblichen Träger (4) mit offenem Querschnittsprofil, eine Vorrichtung zur Längenmessung (12) an einer Außenseite des Trägers (4) sowie einen Meßkopf an dem Trägergehäuse (5) aufweist.

2. Hexapod-Werkzeugmaschine nach Anspruch 1, **dadurch gekennzeichnet, daß** die an dem Träger (4) vorgesehenen Antriebselemente (6) an innenliegenden Flächen des Trägers (4) angeordnet sind.

3. Hexapod-Werkzeugmaschine nach Anspruch 2, **dadurch gekennzeichnet, daß** die Antriebselemente (6) paarweise vorgesehen und jeweils an einander gegenüberliegenden Flächen des Trägers (4) angeordnet sind.

4. Hexapod-Werkzeugmaschine nach zumindest einem der Ansprüche 1 bis 3, **dadurch gekennzeichnet, daß** an dem Trägergehäuse (5) vorgesehenen Antriebselemente innerhalb der offenen Bereiche des Querschnittsprofiles des Trägers (4) angeordnet sind oder in die offenen Bereiche des Querschnittsprofiles des Trägers (4) hineinragen.

5. Hexapod-Werkzeugmaschine nach zumindest einem der Ansprüche 1 bis 4, **dadurch gekennzeichnet, daß** der Träger (4) ein Doppel-T-Querschnittsprofil aufweist.

6. Hexapod-Werkzeugmaschine nach zumindest einem der Ansprüche 1 bis 5, **dadurch gekennzeichnet, daß** der Träger (4) zwei U-förmige Profilkörper (9) aufweist, die mit ihren Bodenseiten zueinander weisen, sowie einen zwischen den Bodenseiten angeordneten Leichtbau-Stützkörper (7).

7. Hexapod-Werkzeugmaschine nach Anspruch 6, **dadurch gekennzeichnet, daß** der Leichtbau-Stützkörper (7) eine Vielzahl von Durchbrüchen und/oder Leerräumen aufweist.

8. Hexapod-Werkzeugmaschine nach einem der Ansprüche 1 bis 7, **dadurch gekennzeichnet, daß** der Träger (4) an seinen Außenseiten Führungsabschnitte aufweist, zur Lagerung des Trägers (4) an dem Trägergehäuse (5), wobei die Lagerung an einer Seite des Trägers (4) eine Festlagerung und an einer anderen Seite des Trägers (4) eine Loslagerung ist.

9. Hexapod-Werkzeugmaschine nach Anspruch 8, **dadurch gekennzeichnet, daß** die Führungsabschnitte als Profilschienen (8), vorgesehen an den Außenseiten des Trägers (4), ausgebildet sind.

10. Hexapod-Werkzeugmaschine nach Anspruch 9, **dadurch gekennzeichnet, daß** die Profilschienen (8) an dem Träger (4) separat ausgebildet sind.

11. Hexapod-Werkzeugmaschine nach zumindest einem der Ansprüche 8 bis 13, **dadurch gekennzeichnet, daß** die Vorrichtung zur Längenmessung (12) an einer Außenseite des Trägers (4) in einen der Führungsabschnitte integriert ist und der Meßkopf (13) an dem Trägergehäuse (5) zur Erfassung von Relativbewegungen zwischen Träger (4) und Trägergehäuse (5) vorgesehen ist.

12. Hexapod-Werkzeugmaschine nach zumindest einem der Ansprüche 1 bis 11, **dadurch gekennzeichnet, daß** eine Außenquerschnittskontur des Trägergehäuses (5) im wesentlichen gleichmäßig polygonal, vorzugsweise hexagonal oder oktagonal ausgebildet ist.

## Claims

1. A hexapod machine tool with struts of adjustable length which are interconnected by a machining module, the struts of adjustable length being provided with length adjustment means implemented as linear drives, **characterized in that** the linear drive comprises a carrier (4) which has an open cross-sectional profile and which is longitudinally displaceable in a carrier housing (5), a linear measurement means (12) on an outer side of the carrier (4) and a measuring head on the carrier housing (5).

2. A hexapod tool machine according to claim 1, **characterized in that** the drive elements (6) provided on the carrier (4) are arranged on inner surfaces of said carrier (4).

3. A hexapod tool machine according to claim 2, **characterized in that** the drive elements (6) are provided in pairs and are arranged on respective opposed surfaces of the carrier (4).

4. A hexapod tool machine according to at least one of the claims 1 to 3, **characterized in that** drive elements provided on the carrier housing (5) are arranged within the open areas of the cross-sectional profile of the carrier (4) or project into said open areas of the cross-sectional profile of the carrier (4).

5. A hexapod tool machine according to at least one of the claims 1 to 4, **characterized in that** the carrier (4) has a double T cross-sectional profile.

6. A hexapod tool machine according to at least one of the claims 1 to 5, **characterized in that** the carrier (4) comprises two U-shaped profiled bodies (9) which are arranged such that their bottom sides face each other as well as a lightweight supporting element (7) arranged between said bottom sides.

7. A hexapod tool machine according to claim 6, **characterized in that** the lightweight supporting element (7) is provided with a plurality of openings and/or empty spaces.

8. A hexapod tool machine according to one of the claims 1 to 7, **characterized in that** the outer sides of the carrier (4) are provided with guide portions for supporting the carrier (4) on the carrier housing (5), the support being a fixed bearing on one side of the carrier (4) and a movable bearing on another side of said carrier (4).

9. A hexapod tool machine according to claim 8, **characterized in that** the guide portions are implemented as profiled rails (8) which are provided on the outer sides of said carrier (4).

10. A hexapod tool machine according to claim 9, **characterized in that** the profiled rails (8) are formed separately on the carrier (4).

11. A hexapod toot machine according to at least one of the claims 8 to 13, **characterized in that** the linear measurement means (12) is integrated in one of the guide portions on an outer side of the carrier (4) and that the measuring head (13) is provided on the carrier housing (5) for detecting relative movements between said carrier (4) and said carrier housing (5).

12. A hexapod tool machine according to at least one of the claims 1 to 11, **characterized in that** the outer cross-sectional contour of the carrier housing (5) takes a substantially uniform polygonal, preferably hexagonal or octagonal form.

## Revendications

1. Machine-outil hexapode avec des montants réglables en longueur et reliés entre eux par un module d'usinage, les montants réglables en longueur comportant des dispositifs de réglage de longueur conçus comme des entraînements linéaires, **caractérisée en ce que** l'entraînement linéaire comporte un support (4) qui est mobile dans le sens de la longueur dans un bâti de support (5) et qui a un profil ouvert en section transversale, un dispositif de mesure de longueur (12) sur un côté extérieur du support (4) ainsi qu'une tête de mesure sur le bâti de support (5).

2. Machine-outil hexapode selon la revendication 1, **caractérisée en ce que** les éléments d'entraînement (6) prévus sur le support (4) sont placés sur des surfaces intérieures du support (4).

3. Machine-outil hexapode selon la revendication 2, **caractérisée en ce que** les éléments d'entraînement (6) sont prévus par paires et sont placés à chaque fois sur des surfaces mutuellement opposées du support (4).

4. Machine-outil hexapode selon au moins l'une des revendications 1 à 3, **caractérisée en ce que** des éléments d'entraînement prévus sur le bâti de support (5) sont placés à l'intérieur des zones ouvertes du profil en section transversale du support (4) ou pénètrent dans les zones ouvertes du profil en section transversale du support (4).

5. Machine-outil hexapode selon au moins l'une des revendications 1 à 4, **caractérisée en ce que** le support (4) comporte un profil en section transversale en double T.

6. Machine-outil hexapode selon au moins l'une des revendications 1 à 5, **caractérisée en ce que** le support (4) comporte deux corps profilés en forme de U (9) qui sont dirigés avec leurs bases l'une vers l'autre ainsi qu'un corps d'appui en construction légère (7) placé entre les bases.

7. Machine-outil hexapode selon la revendication 6, **caractérisée en ce que** le corps d'appui en construction légère (7) comporte de multiples perforations et/ou espaces vides.

8. Machine-outil hexapode selon l'une des revendications 1 à 7, **caractérisée en ce que** le support (4) comporte sur ses côtés extérieurs des tronçons de guidage pour le logement du support (4) sur le bâti de support (5), le logement étant un logement fixe sur un côté du support (4) et un logement libre sur un autre côté du support (4).

9. Machine-outil hexapode selon la revendication 8, **caractérisée en ce que** les tronçons de guidage sont conçus comme des barres profilées (8) prévues sur les côtés extérieurs du support (4).

10. Machine-outil hexapode selon la revendication 9, **caractérisée en ce que** les barres profilées (8) sont conçues séparées sur le support (4).

11. Machine-outil hexapode selon au moins l'une des revendications 8 à 10, **caractérisée en ce que** le dispositif de mesure de longueur (12) est intégré sur un côté extérieur du support (4) dans l'un des tronçons de guidage et **en ce que** la tête de mesure (13) est prévue sur le bâti de support (5) pour la détection de mouvements relatifs entre le support (4) et le bâti de support (5).

12. Machine-outil hexapode selon au moins l'une des revendications 1 à 11, **caractérisée en ce qu'**un contour extérieur de section transversale du bâti de support (5) est conçu de façon polygonale sensiblement régulière, de préférence hexagonal ou octogonal.
